# EUROPEAN PATENT APPLICATION

(11) **EP 3 778 329 A1**
(43) Date of publication of application: **17.02.2021**
(21) Application number: 18912814.3
(22) Date of filing: 29.12.2018
(51) Int. Cl.: B60W 40/02

(54) **DETECTION SYSTEM AND DETECTION METHOD FOR DETECTING VEHICLE EXTERNAL ENVIRONMENT INFORMATION**

(30) Priority: 27.03.2018 CN 201810258311
(71) Applicant: Hangzhou Ole-Systems Co., Ltd., Hangzhou, Zhejiang 310016 (CN)
(72) Inventor: ZHANG, Ou, Hangzhou, Zhejiang 310016 (CN); ZHU, Yaping, Hangzhou, Zhejiang 310016 (CN)
(74) Representative: Lambsdorff & Lange Patentanwälte Partnerschaft mbB
(86) International application number: PCT/CN2018/125596
(87) International publication number: WO 2019/184524

(57) **Abstract**

Disclosed is a detection system and a detection method for detecting external environment information of a vehicle. The detection system includes at least two groups of vehicle-mounted modules (200) arranged on different vehicles, wherein each of the vehicle-mounted modules (200) includes: at least one sensor (201), configured to acquire distance information between the vehicle and a target; a processing unit (202), configured to establish a reference coordinate system by taking the vehicle as a center and perform calculation according to a detection direction of the sensor (201) and the distance information to obtain coordinates of the target in the reference coordinate system; a communication unit (203), configured to receive target positioning information of other vehicles transmitted by a communication unit (203) of at least one of other vehicle-mounted modules (200); and the processing unit (202) generates the external environment information of the vehicle in combination with target positioning information of the vehicle and the target positioning information of at least one of other vehicles. The system overcomes the limitation that a single vehicle independently acquires the external environment information, thereby accurately detecting the external environment information of the vehicle.

## Description

### TECHNICAL FIELD

The invention relates to the field of vehicle-mounted equipment, and in particular, to a detection system and a detection method for detecting external environment information of a vehicle.

### BACKGROUND

With the development and enrichment of vehicle-mounted intelligent equipment, many models of vehicles have already been able to detect external targets through vehicle-mounted sensors and achieve driving assistance functions, for example, a reversing radar alarms for obstacle prompt, and a distance sensor automatically brakes when detecting the obstacle is present in front of driving and may select to follow the vehicle when detecting that the vehicle in the front is driving. A plurality of sensors are arranged at the periphery of the vehicle, thereby realizing detection of the external environment information around the vehicle, that is panoramic detection.

However, due to the limitation of the arrangement position and the detection direction of the sensor, detection signals sent by the sensor are often blocked or shielded, resulting in that some targets cannot be detected successfully and the external environment information of the vehicle cannot be accurately detected and judged, thereby bringing inconvenience to the driving of the vehicle.

Therefore, how to detect a target inconvenient for the vehicle to detect to perfect the acquisition of the external environment information of the vehicle is a technical problem to be solved.

### SUMMARY

To overcome the above technical detects, the present invention aims to provide a detection system and a detection method for detecting external environment information of a vehicle, thereby accurately detecting the external environment information of the vehicle by sharing target positioning information through a plurality of vehicles.

The present disclosure discloses a detection system for detecting external environment information of a vehicle. The detection system includes at least two groups of vehicle-mounted modules arranged on different vehicles, wherein each of the vehicle-mounted modules includes: at least one sensor, configured to detect a target around the vehicle according to a detection direction and acquire distance information between the vehicle and the target; a processing unit, connected to the sensor and configured to acquire the distance information from the sensor, establish a reference coordinate system by taking the vehicle as a center and perform calculation according to the detection direction of the sensor and the distance information to obtain coordinates of the target in the reference coordinate system, the coordinates being target positioning information of the vehicle; a communication unit, connected to the processing unit and configured to acquire the target positioning information of the vehicle and transmits the information to the outside, the communication unit further being connected to communication units of other vehicle-mounted modules through communication and being configured to receive target positioning information of other vehicles transmitted by the communication unit of at least one of other vehicle-mounted modules; and the processing unit generates the external environment information of the vehicle in combination with the target positioning information of the vehicle and the target positioning information of at least one of other vehicles.

Preferably, the vehicle-mounted module further includes a positioning unit which is connected to the processing unit and is configured to acquire vehicle positioning information of the vehicle by an external network; when the processing unit calculates the target positioning information of the vehicle, the target positioning information of the vehicle includes the vehicle positioning information of the vehicle; and the target positioning information of other vehicles transmitted by communication units of other vehicle-mounted modules includes vehicle positioning information of vehicles where other vehicle-mounted modules are located.

Preferably, the sensor further detects dimension information of the target; and when the processing unit calculates the target positioning information of the vehicle, the target positioning information of the vehicle includes the dimension information.

Preferably, the sensor is any one of an infrared sensor, a laser sensor and an ultrasonic sensor.

Preferably, the communication unit is a bluetooth module and performs bluetooth communication with the communication units of other vehicle-mounted modules, or the communication unit is a communication hotspot unit based on an industrial wireless network and performs local area network communication with the communication units of other vehicle-mounted modules.

Preferably, the processing unit is a microprocessor or a single-chip microcomputer.

Preferably, the vehicle-mounted module further includes: a thermal imaging sensor, connected to the processing unit and configured to identify human body information in the external environment information of the vehicle and transmit the human body information to the processing unit.

Preferably, the detection system further includes an external sensing module, arranged in the external environment of the vehicle and configured to transmit fixed target positioning information to the communication units of the peripheral vehicle-mounted modules; and the processing unit generates the external environment information of the vehicle in combination with the target positioning information of the vehicle, the target positioning information of at least one of other vehicles and the fixed target positioning information.

Preferably, the vehicle-mounted module further comprises: a display unit, connected to the processing unit and configured to acquire the external environment information of the vehicle from the processing unit and display the information.

The present invention further discloses a detection method for detecting external environment information of a vehicle, which is implemented on the basis of the above detection system. The detection method includes the following steps:
S101: the sensor detects a target around the vehicle according to a detection direction and acquires distance information between the vehicle and the target;
S102: the processing unit acquires the distance information from the sensor, establishes a reference coordinate system by taking the vehicle as a center and performs calculation according to the detection direction of the sensor and the distance information to obtain coordinates of the target in the reference coordinate system, the coordinates being target positioning information of the vehicle;
S103: the communication unit acquires the target positioning information of the vehicle from the processing unit and transmits the information to the outside, and receives target positioning information of other vehicles transmitted by a communication unit of at least one of other vehicle-mounted modules; and
S104: the processing unit generates the external environment information of the vehicle in combination with the target positioning information of the vehicle and the target positioning information of at least one of other vehicles.

Preferably, the vehicle-mounted module further includes a positioning unit; between S101 and S102, the detection method further comprises: S105: the positioning unit acquires vehicle positioning information of the vehicle by an external network; in S102, when the processing unit calculates the target positioning information of the vehicle, the target positioning information of the vehicle includes the vehicle positioning information of the vehicle; and in S103, the target positioning information of other vehicles transmitted by the communication units of other vehicle-mounted modules includes vehicle positioning information of vehicles where other vehicle-mounted modules are located.

Preferably, in S101, the sensor further detects dimension information of the target; and in S102, when the processing unit calculates the target positioning information of the vehicle, the target positioning information of the vehicle includes the dimension information.

Preferably, the vehicle-mounted module further includes a thermal imaging sensor; and between S101 and S102, the detection method further includes:
S106: the thermal imaging sensor identifies human body information in the external environment information of the vehicle and transmits the human body information to the processing unit.

Preferably, the detection system further includes an external sensing module; in S103, the communication unit further receives the fixed target positioning information transmitted by the external sensing module and transmits the fixed target positioning information to the processing unit; and in S104, the processing unit generates the external environment information of the vehicle in combination with the target positioning information of the vehicle, the target positioning information of at least one of other vehicles and the fixed target positioning information.

Preferably, after S104, the detection method further includes:
S107: the processing unit judges whether the target in the external environment information of the vehicle meets a predetermined safety protection alarm condition; and
S108: when the target meets the safety protection alarm condition, the processing unit sends alarm prompt information to a vehicle-mounted safety system of the vehicle.

Preferably, in S104, when the processing unit receives target positioning information of at least two of other vehicles for the same target, a center value of the target positioning information of the target is calculated by a rear intersection algorithm to serve as the target positioning information of the target. Preferably, in S104, when the processing unit receives the target positioning information of at least two of other vehicles for the same target, the target positioning information of the vehicle is discarded in the subsequent calculation process if deviation between the target positioning information of one of the vehicles and the target positioning information of the vehicle and other vehicles is greater than a distance threshold.

Preferably, in S102, when the processing unit calculates the target positioning information of the vehicle, the target positioning information of the vehicle includes information credibility of the vehicle; and in S104, the processing unit sequences the information credibility of the target positioning information of other vehicles and preferably calculates the target positioning information with the credibility greater than a credibility threshold.

Preferably, the vehicle-mounted module further includes a display unit; and after S104, the detection method further includes:
S109: the display unit acquires the external environment information of the vehicle from the processing unit and displays the information.

By adoption of the above technical solutions, compared with the prior art, the present invention has the following beneficial effects:
1. the limitation that a single vehicle independently acquires the external environment information is overcome, thereby accurately detecting the external environment information of the vehicle; and
2. alarm is sent out to the vehicle-mounted safety system or a driver, thereby taking measures timely and avoiding traffic accidents.

### DESCRIPTION OF DRAWINGS

FIG. 1 is a schematic structural diagram of a detection system for detecting external environment information of a vehicle according to a preferred embodiment of the present disclosure; and
FIG. 2 is a schematic structural diagram of the vehicle-mounted module shown in FIG. 1.

### Reference Numerals:

200-vehicle-mounted module, 201-sensor, 202-processing unit, 203-communication unit, 204-positioning unit, 210-external sensing module.

### DETAILED DESCRIPTION

The advantages of the present invention will be further described in detail below with reference to the accompanying drawings and specific embodiments.

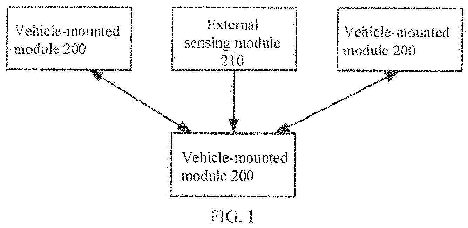

Referring to FIG. 1 which is a schematic structural diagram of a detection system for detecting external environment information of a vehicle according to a preferred embodiment of the present disclosure, the detection system includes at least two groups of vehicle-mounted module 200 arranged on different vehicles, wherein the vehicle-mounted module 200 can detect target positioning information around the vehicle where the vehicle-mounted module 200 is located; and the vehicle-mounted modules 200 on different vehicles may transmit information mutually, thereby detecting and sharing the external environment information of the vehicle.

Further, the detection system includes an external sensing module 210, wherein the external sensing module 210 is arranged in the external environment of the vehicle and transmits fixed target positioning information to the vehicle-mounted modules 200 of the peripheral vehicles. The external sensing module 210 may perform alarm prompt on the fixed target and provide alarm information for the peripheral vehicles.

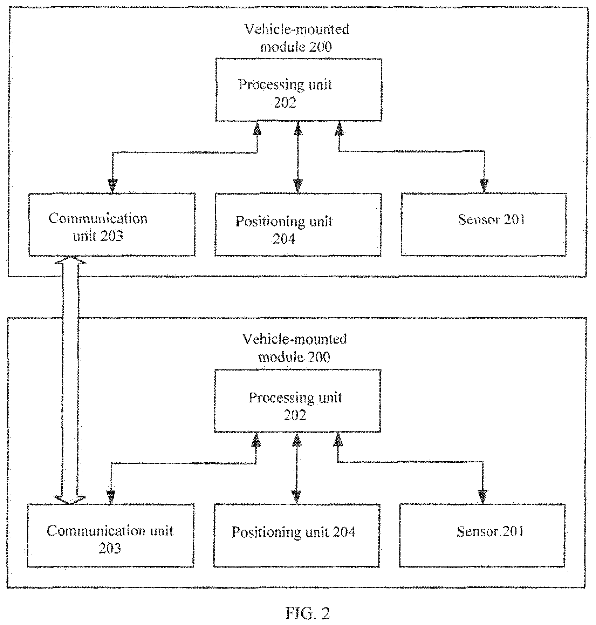

Referring to FIG. 2 which is a schematic structural diagram of the vehicle-mounted module 200 shown in FIG. 1, the vehicle-mounted module 200 includes:

### - sensor 201

At least one sensor 201 detects a target around the vehicle according to a detection direction and acquires distance information between the vehicle and the target. The target may be pedestrians, other vehicles, electric vehicles, road obstacles and the like, and may be an object potentially affecting the driving of the vehicle. The sensor 201 may be any one of an infrared sensor, a laser sensor and an ultrasonic sensor, and detects a distance of the target by sending a signal to the outside and receiving the reflected signal. For example, a vehicle-mounted radar in the prior art is a sensor which may detect a distance of an external obstacle. The vehicle-mounted radars distributed at the periphery of the vehicle can detect the obstacles in multiple directions. The detection direction may be a direction diverging from the vehicle serving as a center to the periphery of the vehicle, may be parallel to a horizontal plane or may form an included angle with the horizontal plane, for example may incline upwards or incline downwards. The sensor 201 may further be a video camera so as to acquire image information of the external environment of the vehicle.

### - Processing unit 202

The processing unit 202 may be a microprocessor or a single-chip microcomputer, and can receive an external signal, perform data calculation and output the signal to the outside. The processing unit 202 is connected to the sensor 201 and acquires the distance information from the sensor 201. The processing unit 202 has an operation processing function, establishes a reference coordinate system by taking the vehicle (that is the vehicle where the processing unit 202 is located) as a center and performs calculation according to the detection direction of the sensor 201 and the distance information to obtain coordinates of the target in the reference coordinate system, the coordinates being the target positioning information of the vehicle. Since the position of each sensor 201 in the vehicle is known, the coordinates of the sensor 201 in the reference coordinate system may be preset in the processing unit 202. When one sensor 201 detects distance information of one target, the coordinates of the target may be obtained by extending a distance length in the distance information from the coordinates of the sensor 201 in the reference coordinate system along the detection direction according to the detection direction of the sensor 201 and the distance information. The coordinates of the target may embody a position relationship between the target and the vehicle, that is the target positioning information of the vehicle is formed. At the same time, the processing unit 202 may form target positioning information with respect to one target and may also form target positioning information of a plurality of targets.

### - Communication unit 203

The communication unit 203 may be a bluetooth module and may perform bluetooth communication with the communication units of other vehicle-mounted modules 200. The communication unit may further be a communication hotspot unit based on an industrial wireless network, such as a zigbee industrial network communication thermoelectric or WIA network communication unit, and may perform local area network communication with the communication units of other vehicle-mounted modules 200. The communication hotspot unit of the industrial wireless network may realize ad hoc network communication and can adapt to the situation that the peripheral vehicles change continuously during driving of the vehicle. The communication unit 203 is connected to the processing unit 202, acquires the target positioning information of the vehicle from the processing unit 202 and sends the information to the outside. The communication unit 203 is further connected to the communication units 203 of other vehicle-mounted modules 200 through communication, and receives the target positioning information of other vehicles transmitted by the communication unit 203 of at least one of other vehicle-mounted modules 200. Other vehicle-mounted modules 200 detect the same or different targets from different positions or angles on other vehicles, thereby forming target positioning information of other vehicles. It can be seen that the vehicle-mounted modules 200 on different vehicles mutually transmit the target positioning information through respective communication units 203 so as to realize information sharing and remedy the defect that incomplete information is acquired when single vehicle performs target detection, which is the core invention point of the present invention.

The external sensing module 210 transmits fixed target positioning information to the communication units 203 of the peripheral vehicle-mounted modules 200, that is when the vehicle-mounted module 200 of any vehicle enters the communication range of the external sensing module 210, the vehicle-mounted module 200 may receive the fixed target positioning information transmitted by the external sensing module 210. The processing unit 202 generates the external environment information of the vehicle in combination with the target positioning information of the vehicle, the target positioning information of at least one of other vehicles and the fixed target positioning information. The external sensing module 210 provides an auxiliary prompt function outside the vehicle-mounted module 200 and broadcasts the fixed target, so that each vehicle can acquire the information timely and take measures.

The processing unit 202 generates the external environment information of the vehicle in combination with the target positioning information of the vehicle and the target positioning information of at least one of other vehicles. After the processing unit 202 acquires the target positioning information of other vehicles, it is necessary to integrate the target positioning information detected by different vehicles to form complete information, namely the external environment information of the vehicle, if the target positioning information of other vehicles and the target positioning information of the vehicle are for different targets, the processing unit 202 adds a new target in the reference coordinate system and forms the external environment information of the vehicle including coordinate information of all the targets; and if the target positioning information of other vehicles and the target positioning information of the vehicle are for the same target, it is considered to correct the coordinates of the target, for example, center values of a plurality of coordinates of the target are calculated by a rear intersection algorithm and are taken as the finally confirmed external environment information of the vehicle. If the target positioning information includes a video image, a complete three-dimensional panoramic image by an image stitching technology to serve as the external environment information of the vehicle.

### - Positioning unit 204

The positioning unit 204 may be a GPS module, a Beidou module or a mobile communication module, and may perform positioning by a GPS network, a Beidou network or a mobile communication network to acquire the vehicle positioning information of the vehicle. The vehicle positioning information may be represented by longitude and latitude coordinate information of the earth. When the processing unit 202 calculates the target positioning information of the vehicle, the target positioning information of the vehicle includes the vehicle positioning information of the vehicle. The target positioning information of other vehicles transmitted by the communication units 203 of other vehicle-mounted modules 200 includes vehicle positioning information of vehicles where other vehicle-mounted modules 200 are located. Absolute position information of vehicles may be acquired through auxiliary positioning of the positioning unit 204, so that position information sharing calculation can be realized among different vehicles. For example, if the vehicle positioning information of the vehicle A and the vehicle B is known, a relative position of the target positioning information relative to the vehicle A may be acquired in combination with the vehicle positioning information when target positioning information detected by the vehicle B is transmitted to the vehicle A, thereby accurately sharing the target positioning information.

Further, the sensor 201 detects dimension information of the target, for example, a boundary of one target may be detected by more than two sensors 201, thereby acquiring the dimension information of the target. When the processing unit 202 calculates the target positioning information of the vehicle, the target positioning information of the vehicle includes the dimension information, such that the coordinates of the target in the reference coordinate system shows that the dimension information is included, that is, a region consisting of a plurality of coordinate points instead of one coordinate point. As further improvement of the detection system, the vehicle-mounted module 200 further includes a thermal imaging sensor which is connected to the processing unit 202 and is configured to identify human body information in the external environment information of the vehicle and transmit the human body information to the processing unit 202. In general, a temperature of the human body is obviously higher than the environment temperature; therefore, the human body may be detected by the thermal imaging sensor to acquire the human body information which is processed by the processing unit 202 as a special event.

As further improvement of the detection system, the vehicle-mounted module 200 further includes a display unit which is connected to the processing unit 202 and is configured to acquire the external environment information of the vehicle from the processing unit 202 and display the information. The external environment information of the vehicle calculated by the processing unit 202 can embody its value only by being acquired by a driver of the vehicle, and thus, the external environment information of the vehicle is displayed by the display unit. The display unit may be a display screen or a digital tube array. The external environment information of the vehicle may be displayed by displaying the reference coordinate system and the coordinate position of the target, may also be displayed by display a three-dimensional panoramic image under the support of video image information, and may further be displayed by displaying the position of each target based on map information under the support of the map information. In order to better remind the driver, while the external environment information of the vehicle is displayed, voice prompt may be conducted, for example, a prompt tone is sent out to represent a target is present in the vicinity of the vehicle, even a distance between the target and the vehicle may be notified through the frequency of the prompt tone. The vehicle-mounted module 200 may further be connected to a vehicle-mounted safety system and directly send out alarm information to the vehicle-mounted safety system performs braking or other processing operations.

A detection method for detecting external environment information of a vehicle in a preferred embodiment of the present invention is implemented on the basis of the above detection system. The detection method includes the following steps:
S101: the sensor 201 detects a target around the vehicle according to a detection direction and acquires distance information between the vehicle and the target.

The step is implemented on the same vehicle in such a way that the sensor 201 detects the target around the vehicle where the vehicle-mounted module 200 is located and acquires the distance information between the vehicle and the target. The sensor 201 works by signal reflection and may acquire the distance information by judging a duration between signal sending and receiving and combining with the propagation speed of the signal.

S102: the processing unit 202 acquires the distance information from the sensor 201, establishes a reference coordinate system by taking the vehicle as a center and performs calculation according to the detection direction of the sensor 201 and the distance information to obtain coordinates of the target in the reference coordinate system, the coordinates being target positioning information of the vehicle.

To accurately calculate the position of the target, it is necessary to establish the reference coordinate system by the processing unit 202, and the target positioning information is acquired in the form of coordinate, thereby accurately recording a relative position relationship between the target and the vehicle. The processing unit 202 may calculate the coordinates of the target in the reference coordinate system by the coordinates, the detection direction and the distance information of the preset sensor 201.

S103: the communication unit 203 acquires the target positioning information of the vehicle from the processing unit 202 and transmits the information to the outside, and receives target positioning information of other vehicles transmitted by the communication unit 203 of at least one of other vehicle-mounted modules 200.

Only the target positioning information of the vehicle is acquired by S102. It is also necessary to perform information interaction with the vehicle-mounted modules 200 on other vehicles. In this step, the communication unit 203 interacts with other vehicle-mounted modules 200 for the target positioning information, which not only transmits the target positioning information of the vehicle to the outside, but also receives the target positioning information of other vehicles. The target positioning information of different vehicles is shared by the step, which is an important link of the present invention.

S104: the processing unit 202 generates the external environment information of the vehicle in combination with the target positioning information of the vehicle and the target positioning information of at least one of other vehicles.

Information processing is performed in this step. The processing unit 202 generates complete external environment information of the vehicle capable of reflecting the external situation of the vehicle in combination with the target positioning information of the vehicle and the target positioning information of other vehicles. The target positioning information of other vehicles and the target positioning information of the vehicle may be for the same target, and may be for different targets. In this way, the processing unit 202 generates complete external environment information of the vehicle, so that the driver or the vehicle-mounted safety system can perform judgment and subsequent processing operation.

Further, the vehicle-mounted module 200 includes a positioning unit 204; and between S101 and S102, the detection method further includes:
S105: the positioning unit 204 acquires vehicle positioning information of the vehicle by an external network.

In S102, when the processing unit 202 calculates the target positioning information of the vehicle, the target positioning information of the vehicle includes the vehicle positioning information of the vehicle, that is the reference coordinate system is combined with the longitude and latitude coordinates of the earth in the vehicle positioning information, thereby realizing cooperation of a relative coordinate system and an absolute coordinate system. In S103, the target positioning information of other vehicles transmitted by the communication units 203 of other vehicle-mounted modules 200 includes vehicle positioning information of vehicles where other vehicle-mounted modules 200 are located. In this way, accurate position information may be confirmed among different vehicles, and the target positioning information may be shared on this basis, thereby realizing conversion of the coordinate information of the targets detected by different vehicles by taking the longitude and latitude coordinates of the earth as a bridge.

Further, in S101, the sensor 201 further detects dimension information of the target. In S102, when the processing unit 202 calculates the target positioning information of the vehicle, the target positioning information of the vehicle includes the dimension information.

Further, the vehicle-mounted module 200 includes a thermal imaging sensor; and between S101 and S102, the detection method further includes:
S106: the thermal imaging sensor identifies human body information in the external environment information of the vehicle and transmits the human body information to the processing unit 202.

In this step, a human body outside the vehicle is identified, so that the processing unit 202 can perform higher-priority processing and warn the driver or measures can be taken by the vehicle-mounted safety system, thereby preventing the vehicle from hitting pedestrians.

The detection system further includes an external sensing module 210. On this basis, in S103, the communication unit 203 further receives fixed target positioning information transmitted by the external sensing module 210 and transmits the fixed target positioning information to the processing unit 202. In S104, the processing unit 202 generates the external environment information of the vehicle in combination with the target positioning information of the vehicle, the target positioning information of at least one of other vehicles and the fixed target positioning information. Even if the target positioning information is shared by a plurality of vehicles, it is still inevitable that part of the targets cannot be detected timely. An external sensing module 210 fixed outside the vehicle is required to perform assistant prompt. The external sensing module 210 may detect the target in a specific region and send the target to the outside, and may also preset positioning information of a long-term fixed target and fixed target positioning information internally and transmit the fixed target positioning information to the outside.

As further improvement of the detection method, after S104, the detection method further includes: S107: the processing unit 202 judges whether the target in the external environment information of the vehicle meets a predetermined safety protection alarm condition.

In this step, judgment operation is performed. The safety protection alarm condition may be whether a distance between the target and the vehicle is less than a distance threshold. When the distance between the target and the vehicle is less than the distance threshold, the safety protection alarm condition is triggered. When a pedestrian outside the vehicle is detected, the distance information may be ignored and alarm may be performed directly. Since the processing unit 202 has already generated complete external environment information of the vehicle, it is deemed that the judgment is valid as long as any target meets the safety protection alarm condition.

S108: when the target meets the safety protection alarm condition, the processing unit 202 sends alarm prompt information to the vehicle-mounted safety system of the vehicle.

When S107 is judged to be valid, the step is performed and the processing unit 202 sends alarm prompt information to the vehicle-mounted safety system. Most existing vehicles have a safety system, that is a vehicle-mounted safety system. After receiving the alarm prompt information sent by the processing unit 202, the vehicle-mounted safety system may control the vehicle to take measures, such as braking, whistling and other operations.

Further, in S104, when the processing unit 202 receives target positioning information of at least two of other vehicles for the same target, a center value of the target positioning information of the target is calculated by a rear intersection algorithm to serve as the target positioning information of the target. Since errors will inevitably occur when different vehicles detect the same target to form the target positioning information, it is necessary to process multiple pieces of target positioning information of the same target to reduce affection on the detection result by the errors as much as possible. The processing method is the rear intersection algorithm. By the algorithm, the center value of the coordinates of the target may be calculated on the basis of the position information and target positioning information of different vehicles to serve as the final target positioning information of the target.

Further, in S104, when the processing unit 202 receives the target positioning information of at least two of other vehicles for the same target, the target positioning information of the vehicle is discarded in the subsequent calculation process if deviation between the target positioning information of one of the vehicles and the target positioning information of the vehicle and other vehicles is greater than a distance threshold. Based on the improvement, it is necessary to eliminate the target positioning information of an individual vehicle which is abnormal, thereby not interfering the final calculation result. For example, the vehicle A, the vehicle B and the vehicle C have all acquired coordinate information. If a difference between the coordinate information acquired by the vehicle A and the vehicle B is 5, a difference between the coordinate information acquired by the vehicle B, the vehicle A and the vehicle C is 10, and the distance threshold is 7, the target positioning information of the vehicle C is eliminated, and the target positioning information of the vehicle C is not considered when the processing unit 202 generates the external environment information of the vehicle.

Further, in S102, when the processing unit 202 calculates the target positioning information of the vehicle, the target positioning information of the vehicle includes information credibility of the vehicle. The information credibility is obtained according to the own position of the vehicle or the signal situation, for example, the position of the vehicle is blocked by a building or the intensity of the signal returned during target detection is not high, which will affect the information credibility. To facilitate calculation, the subsequent judgment and calculation may be facilitated by setting an information credibility value. In S104, the processing unit 202 sequences the information credibility of the target positioning information of other vehicles and preferably calculates the target positioning information with the credibility greater than a credibility threshold. The credibility threshold may be obtained by actual measurement, thereby ensuring the finally acquired external environment information of the vehicle to be accurate and credible.

The vehicle-mounted module 200 further includes a display unit. Accordingly, after S104, the detection method further includes:
S109: the display unit acquires the external environment information of the vehicle from the processing unit 202 and displays the information.

It shouldbe noted that the embodiments of the present invention have optimal implementation and do not limit the present invention in any forms. Any person skilled in the art may change or modify the embodiments into equivalent effective embodiments by the technical contents disclosed above. Any modifications or equivalent variations and embellishes made on the above embodiments according to the technical essence of the present invention are within the scope of the technical solution of the pre sent invention without departing from the contents of the technical solution of the present invention.

## Claims

1. A detection system for detecting external environmental information of a vehicle, comprising at least two groups of vehicle-mounted modules arranged on different vehicles, wherein each of the vehicle-mounted modules comprises:
at least one sensor, configured to detect a target around the vehicle according to a detection direction and acquire distance information between the vehicle and the target;
a processing unit, connected to the sensor and configured to acquire the distance information from the sensor, establish a reference coordinate system by taking the vehicle as a center and perform calculation according to the detection direction of the sensor and the distance information to obtain coordinates of the target in the reference coordinate system, the coordinates is the target positioning information of the vehicle;
a communication unit, connected to the processing unit and configured to acquire the target positioning information of the vehicle from the processing unit and transmit the information to the outside, the communication unit further being connected to communication units of other vehicle-mounted modules through communication and being configured to receive target positioning information of other vehicles transmitted by the communication unit of at least one of other vehicle-mounted modules; and
the processing unit generates the external environment information of the vehicle in combination with the target positioning information of the vehicle and the target positioning information of at least one of other vehicles.

2. The detection system according to claim 1, wherein
the vehicle-mounted module further comprises a positioning unit which is connected to the processing unit and is configured to acquire vehicle positioning information of the vehicle by an external network; when the processing unit calculates the target positioning information of the vehicle, the target positioning information of the vehicle comprises the vehicle positioning information of the vehicle; and
the target positioning information of other vehicles transmitted by the communication units *of* other vehicle-mounted modules comprises vehicle positioning information of vehicles where other vehicle-mounted modules are located.

3. The detection system according to claim 2, wherein
the sensor detects dimension information of the target; and
when the processing unit calculates the target positioning information of the vehicle, the target positioning information of the vehicle comprises the dimension information.

4. The detection system according to any one of claims 1 to 3, wherein
the sensor is any one of an infrared sensor, a laser sensor and an ultrasonic sensor.

5. The detection system according to any one of claims 1 to 3, wherein
the communication unit is a bluetooth module and performs bluetooth communication with the communication units of other vehicle-mounted modules, or
the communication unit is a communication hotspot unit based on an industrial wireless network and performs local area network communication with the communication units of other vehicle-mounted modules.

6. The detection system according to any one of claims 1 to 3, wherein
the processing unit is a microprocessor or a single-chip microcomputer.

7. The detection system according to any one of claims 1 to 3, wherein
the vehicle-mounted module further comprises:
a thermal imaging sensor, connected to the processing unit and configured to identify human body information in the external environment information of the vehicle and transmit the human body information to the processing unit.

8. The detection system according to any one of claims 1 to 3,
further comprising:
an external sensing module, arranged in the external environment of the vehicle and configured to transmit fixed target positioning information to the communication units of the peripheral vehicle-mounted modules; and
the processing unit generates the external environment information of the vehicle in combination with the target positioning information of the vehicle, the target positioning information of at least one of other vehicles and the fixed target positioning information.

9. The detection system according to any one of claims 1 to 3, wherein
the vehicle-mounted module further comprises:
a display unit, connected to the processing unit and configured to acquire the external environment information of the vehicle from the processing unit and display the information.

10. A detection method for detecting external environment information of a vehicle, being implemented on the basis of the detection system according to claim 1, wherein the detection method comprises the following steps:
S101: the sensor detects a target around the vehicle according to a detection direction and acquires distance information between the vehicle and the target;
S102: the processing unit acquires the distance information from the sensor, establishes a reference coordinate system by taking the vehicle as a center and performs calculation according to the detection direction of the sensor and the distance information to obtain coordinates of the target in the reference coordinate system, the coordinates being target positioning information of the vehicle;
S103: the communication unit acquires the target positioning information of the vehicle from the processing unit and transmits the information to the outside, and receives target positioning information of other vehicles transmitted by a communication unit of at least one of other vehicle-mounted modules; and
S104: the processing unit generates the external environment information of the vehicle in combination with the target positioning information of the vehicle and the target positioning information of at least one of other vehicles.

11. The detection method according to claim 10, wherein
the vehicle-mounted module further comprises a positioning unit;
Between S101 and S102, the detection method further comprises:
S105: the positioning unit acquires vehicle positioning information of the vehicle by an external network;
in S102, when the processing unit calculates the target positioning information of the vehicle, the target positioning information of the vehicle comprises the vehicle positioning information of the vehicle; and
in S103, the target positioning information of other vehicles transmitted by the communication units of other vehicle-mounted modules comprises vehicle positioning information of vehicles where other vehicle-mounted modules are located.

12. The detection method according to claim 11, wherein
in S101, the sensor further detects dimension information of the target; and
in S102, when the processing unit calculates the target positioning information of the vehicle, the target positioning information of the vehicle comprises the dimension information.

13. The detection method according to claims 10 to 12, wherein
the vehicle-mounted module further comprises a thermal imaging sensor;
between S101 and S102, the detection method further comprises:
S106: the thermal imaging sensor identifies human body information in the external environment information of the vehicle and transmits the human body information to the processing unit.

14. The detection method according to claims 10 to 12, wherein
the detection system further comprises an external sensor module;
in S103, the communication unit further receives the fixed target positioning information transmitted by the external sensing module and transmits the fixed target positioning information to the processing unit; and
in S104, the processing unit generates the external environment information of the vehicle in combination with the target positioning information of the vehicle, the target positioning information of at least one of other vehicles and the fixed target positioning information.

15. The detection method according to claims 10 to 12, wherein
after S104, the detection method further comprises:
S107: the processing unit judges whether the target in the external environment information of the vehicle meets a predetermined safety protection alarm condition; and
S108: when the target meets the safety protection alarm condition, the processing unit sends alarm prompt information to a vehicle-mounted safety system of the vehicle.

16. The detection method according to claims 10 to 12, wherein
in S104, when the processing unit receives target positioning information of at least two of other vehicles for the same target, a center value of the target positioning information of the target is calculated by a rear intersection algorithm to serve as the target positioning information of the target.

17. The detection method according to claim 16, wherein
in S104, when the processing unit receives the target positioning information of at least two of other vehicles for the same target, the target positioning information of the vehicle is discarded in the subsequent calculation process if deviation between the target positioning information of one of the vehicles and the target positioning information of the vehicle and other vehicles is greater than a distance threshold.

18. The detection method according to claims 10 to 12, wherein
in S102, when the processing unit calculates the target positioning information of the vehicle, the target positioning information of the vehicle comprises information credibility of the vehicle; and
in S104, the processing unit sequences the information credibility of the target positioning information of other vehicles and preferably calculates the target positioning information with the credibility greater than a credibility threshold.

19. The detection method according to claims 10 to 12, wherein
the vehicle-mounted module further comprises a display unit;
after S104, the detection method further comprises:
S109: the display unit acquires the external environment information of the vehicle from the processing unit and displays the information.
